# EUROPEAN PATENT SPECIFICATION

(11) **EP 0 526 784 B1**
(45) Date of publication and mention of the grant of the patent: **16.10.1996**
(21) Application number: 92112230.5
(22) Date of filing: 17.07.1992
(51) Int. Cl.: G09F 9/37, G02B 26/08

(54) **Color filter for deformable mirror device and method for manufacture**
Farbfilter für deformierbare Spiegelvorrichtung und Herstellungsverfahren
Filtre couleur pour dispositif à miroir déformable et méthode pour la fabrication

(30) Priority: 31.07.1991 US 739079
(43) Date of publication of application: 10.02.1993
(60) Divisional application: 95117264.2
(73) Proprietor: TEXAS INSTRUMENTS INCORPORATED, Dallas Texas 75265 (US)
(72) Inventor: Mignardi, Michael A., Dallas, Texas (US); Story, Brooks J., Richardson, Texas (US)
(74) Representative: Schwepfinger, Karl-Heinz, Dipl.-Ing.

(56) References cited:
- EP-A- 0 139 991
- EP-A- 0 262 829
- PATENT ABSTRACTS OF JAPAN vol. 15, no. 247 (P-1219)25 June 1991 & JP-A-30 80 203 (NIPPON SHEET) 5 April 1991
- IBM TECHNICAL DISCLOSURE BULLETIN vol. 22, no. 12, May 1980, pages 5575 - 5577 HARTSTEIN 'color projection display system using silicon micromechanics'

## Description

### RELATED CASE

This application is related to and filed contemporaneously with "Color Deformable Mirror Device and Method for Manufacture," Serial No. 07/739 078 , by Nelson, now US-A-5 168 406.

### TECHNICAL FIELD OF THE INVENTION

This invention relates generally to the field of electronic devices and more particularly to deformable mirror devices of the type defined in the precharacterizing part of claim 1.

### BACKGROUND OF THE INVENTION

Deformable mirror devices ("DMDs") are semiconductor devices containing at least one row of deflectable mirrors. The mirror position, which is controlled electronically, determines the path of reflected incident light. Deformable mirror devices may be manufactured with any number of mirror rows. By using high density mirror arrays, reflected light from the individual mirrors can be combined to form visual images.

The introduction of color to deformable mirror device systems has been problematic to date. One approach to full color deformable mirror device systems is to use three deformable mirror devices, each with a different primary color source or external color filter. The three monochrome deformable mirror device images are combined into a single image to produce the desired three color picture. This system has the disadvantages of complex chip alignment, output convergence, and excessive cost and package size of the related optic system.

The preferred approach to color light modulation, therefore, is to use a single deformable mirror device chip modified to produce the desired color image. Simply aligning a matrix of colored windows above the matrix of individual mirrors, however, is not satisfactory. The unmodulated light striking the deformable mirror device is supplied externally to the individual mirrors and off of the final viewing optical axis. Consequently, incident light would pass through the filter window structure twice before being observed with the possibility of passing through two different colored window elements. The optical alignment for using such an off-chip color filter window is complex.

Therefore a need has risen for a single chip deformable mirror device operable to accurately reproduce full color images.

### SUMMARY OF THE INVENTION

In accordance with the present invention, a deformable mirror device is provided which substantially overcomes problems associated with producing color deformable mirror device systems and which has the features of the characterizing part of claim 1.

A deformable mirror device is disclosed comprising a plurality of deformable mirrors. The mirrors are operable to selectively reflect incident light responsive to electronic signals. The mirrors are divisible into at least two groups. Each group is coated with a mixture of dye and resist causing the mirrors to reflect a particular wavelength or wavelengths of the incident light thus producing the characteristic of at least two colors.

One technical advantage of the disclosed invention is the ability to precisely and accurately place colors on individual mirror elements of a deformable mirror device. The particular colors may be arranged so as to create a full color display when viewed at the macroscopic level.

It is another technical advantage that the disclosed process applies a thin layer of dye-resist to the deformable mirror device array. The thinness of the layer minimizes the induced stresses within the mirror element.

### BRIEF DESCRIPTION OF THE DRAWINGS

For a more complete understanding of the present invention, and the advantages thereof, reference is now made to the following descriptions taken in conjunction with the accompanying drawings, in which:
FIGURE 1 shows a deformable mirror device in perspective;
FIGURE 2 depicts a diagrammatic view of a typical three-color pattern suitable for creating full color images;
FIGURE 3 depicts graphically a color transmission profile of three dyes suitable to create full color images when used jointly; and
FIGUREs 4a-f depict cross-sectional side views of a deformable mirror device during various stages of fabrication.

### DETAILED DESCRIPTION OF THE INVENTION

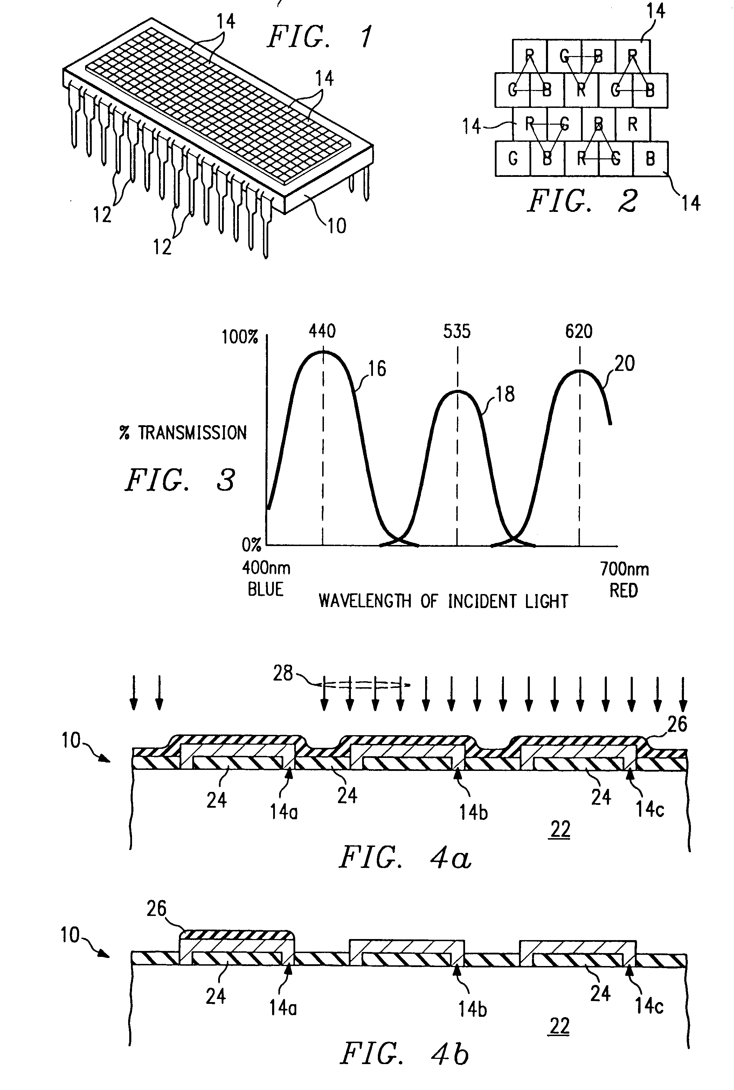

The preferred embodiment of the present invention is best understood by reference to FIGUREs 1-4, like numerals corresponding to similar parts of the various drawings.

Heretofore, use of deformable mirror devices has been confined to monochromatic reflection of light. A more complete understanding of present-day deformable mirror devices and their use may be had by referring to "Spatial Light Modulator printer and Method of Operation," U.S. Patent No. 4,662,746 to Hornbeck et al., filed October 30, 1985. This patent is incorporated herein by reference.

FIGURE 1 depicts schematically a deformable mirror device 10. Electronic control signals are input to DMD 10 through pins 12. DMD 10 comprises individually addressable mirror elements 14. In the present invention, mirror elements 14 may be produced in a wide variety of sizes but are typically 20 µm x 20 µm in size. Mirror elements 14 may be arranged in an n x m array as depicted in FIGURE 1, in a single thin line, or in several separate lines. In the present invention, mirror elements 14 are individually colored during the manufacturing process as will be more fully described below. By properly selecting the color pattern on mirror elements 14, and therefore the color of reflected incident light, DMD 10 may reflect white light to produce full color images.

FIGURE 2 illustrates one example of a three-color mapping scheme applicable to deformable mirror device 10 (FIGURE 1). In this scheme, "R" = red, "G" = green, and "B" = blue. By staggering the three primary colors on mirrors 14 as depicted, three individual mirrors may be operated jointly to produce a larger individual full color pixel. Three adjacent mirrors 14, as indicated by the overlying triangles, create a pixel which is capable of displaying any combination of the three colors.

FIGURE 3 depicts graphically the color transmission profile of a typical ternary system of primary colors that could be used in the staggered arrangement of FIGURE 2. Single color filters in this system would have transmission peaks centered around 440 (blue), 535 (green) or 620 (red) nanometers. These colors correspond to profiles 16, 18 and 20 respectively.

The anthraquinone and phthalocyanine families of organic dyes are suitable to produce light transmission profiles depicted by curve 16 in FIGURE 3 when applied to a mirrored surface. The azo family of organic dyes is suitable to produce light transmission properties depicted by curve 20. These two sets of dyes may be combined to form a dye with light transmission characteristics depicted by the central curve 18. The resist and dye are together dissolved by a suitable solvent such as toluene or xylene. The two may be combined in ratios varying from one-to-one to four-to-one (mass of resist to mass of dye) depending on desired color intensity.

### Example 1

(Blue dye-resist mixture). A solution is prepared comprising 1.46 grams of positive electron beam resist and 4.0 grams of toluene. A separate solution comprising 1.25 grams of Solvent Blue 35 dye, 1.0 gram of Solvent Blue 67 dye, and 29.9 grams of toluene is refluxed for four hours under nitrogen. Solvent Blue 35 may be obtained from BASF Corp. under the name of "SUDAN BLUE 670." Solvent Blue 67 may be obtained from the Ciba-Geigy Corp. under the name "ORASOL BLUE GN." The blue dye solution is cooled and filtered. After filtering, the total dissolved dye content is 6.8%. The resist solution and 15.0 grams of the blue dye solution are combined and filtered to remove any undissolved material. The resulting dyed resist solution is stirred uncovered until enough toluene evaporates to leave a total dissolved solids (polymer and dye) content of 27.8%. The blue dyed resist is deposited onto the DMD substrate by spin coating at 2000 RPM and baked in air for 30 minutes at 120 °C.

### Example 2

(Green dye-resist mixture). A solution is prepared comprising 1.9 grams of positive electron beam resist and 4.5 grams of toluene. A separate solution comprising 4.0 grams of Solvent Blue 67 dye, 3.0 grams of Solvent Yellow 56 dye, and 70 grams of toluene is refluxed for four hours under nitrogen. Solvent Yellow 56 may also be obtained from BASF under the name "SUDAN YELLOW 150." The green dye solution is cooled and filtered. After filtering, the total dissolved dye content is 7.5%. The resist solution and 23.0 grams of the green dye solution is combined and filtered to remove any undissolved material. The resulting dyed resist solution is stirred uncovered until enough toluene evaporates to leave a total dissolved solids (polymer and dye) content of 23%. The green dyed resist is deposited onto a substrate by spin coating at 2000 RPM and baked in air for 30 minutes at 120 °C.

### Example 3

(Red dye-resist mixture). A solution is prepared comprising 0.75 grams of positive electron beam resist and 1.83 grams of toluene. A separate solution comprising 2.5 grams of Solvent Red 24 dye and 20.0 grams of toluene is refluxed for sixteen hours under nitrogen. Solvent Red 24 may be obtained from BASF under the name "SUDAN RED 380." The red dye solution is cooled and filtered. After filtering, the total dissolved dye content is 11.1%. The resist solution and 3.42 grams of the red dye solution is combined and filtered to remove any undissolved material. The red dyed resist was deposited onto a substrate by spin coating at 1500 RPM and baked in air for 30 minutes at 120 °C.

FIGUREs 4a-f depict cross-sectional views of DMD 10 during various stages of fabrication. A more complete understanding of monochrome DMD fabrication may be had by referring to U.S. Patent No. 4,662,746 issued on May 5, 1987 to Hornbeck, entitled "Spatial Light Modulator and Method," which is incorporated herein by reference.

In FIGURE 4a, mirror elements 14a-c have been constructed on top of substrate 22 but sacrificial layer 24 has not been undercut at this stage. Substrate 22 contains but does not depict the circuitry necessary to control mirrors 14a-c according to input signals. A layer 26, comprising a mixture of resist and dye, is uniformly applied to DMD 10. The resulting dye-resist layer is typically from 1 to 3 microns in thickness. Layer 26 has the characteristic of one of the three colors depicted in connection with FIGURE 3. Layer 26 is then masked and exposed to, for example, ultraviolet light (indicated by arrows 28) such that when treated with an etchant or developer, layer 26 is removed from all mirrors not desired to be colored. In the example of FIGUREs 4a-f, layer 26 is part positive resist and will be removed from all mirrors except mirror 14a. Patterning of layer 26 results in the coating of approximately one-third of the mirrors with one component of the ternary color system.

FIGURE 4b depicts DMD 10 after layer 26 has been etched from all undesired mirrors.

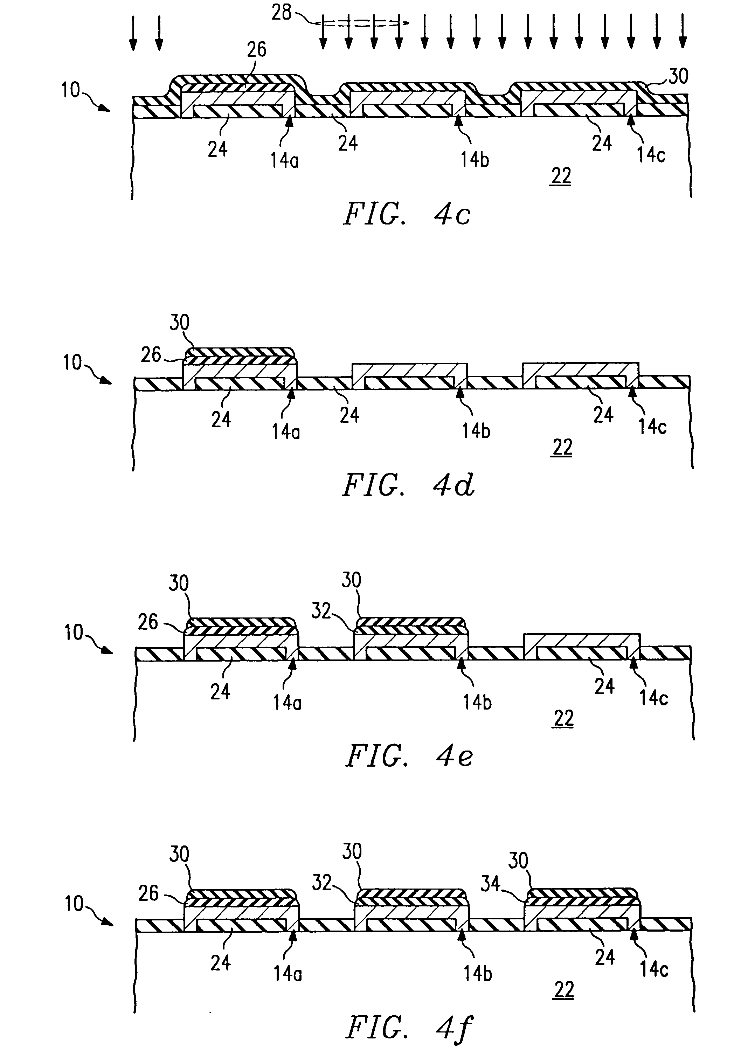

FIGURE 4c depicts DMD 10 after protective layer 30 has been deposited over the entire device. Layer 30 is then patterned using conventional microlithographic techniques such that only the mirrors previously coated with dye resist layer 26 (here mirror 14a) are covered with the protective coating. Protective layer 30 should be optically transparent, such as a thin layer of silicon dioxide. Protective layer 30 will protect layer 26 from being etched during subsequent processing steps. It may be possible to fabricate the colored mirrors without protective layer 30 by using etch-resistant resists.

FIGURE 4d depicts DMD 10 after protective layer 30 has been etched from all mirrors other than mirror 14a.

In FIGURE 4e, a second colored layer of dyed resist has been applied to DMD 10, patterned, and etched as described in connection with FIGURES 4a and 4b. Layer 32 comprises a resist and a dye or dyes necessary to form the second of the three color filters. After patterning, layer 32 covers the second third of the mirrors, corresponding to mirror 14b. Layer 32 is then coated by a protective layer 30 as described in connection with FIGURES 4c and 4d.

FIGURE 4f depicts the complete ternary color filter system for DMD 10. Here, the third layer of dyed resist, layer 34, has been applied to DMD 10, patterned and etched as described in connection with FIGURES 4a and 4b. Layer 34 comprises a resist and a dye or dyes necessary to form a third color filter. After patterning, layer 34 covers the final third of the mirrors, corresponding to 14c. Layer 34 is then coated by protective layer 30 as described in connection with FIGURES 4c and 4d.

Layers 26, 32 and 34 are deposited and patterned using conventional microlithographic techniques. Each layer, however, may be processed by different techniques, such as UV, deep UV, electron beam, ion beam, or x-ray lithography, and may comprise different resists.

The final stage in DMD fabrication is the undercutting of the mirrors. This is accomplished by removal of sacrificial layer 24 using selective etching techniques. The removal of layer 24 allows for bistable or tristable operation of the mirrors.

Although the present invention and its advantages have been described in detail, it should be understood the various changes, substitutions and alterations can be made herein without departing from the scope of the invention as defined by the appended claims.

## Claims

1. A deformable mirror device (10) comprising:
a plurality of deformable mirrors (14) operable to selectively reflect incident light (28) responsive to applied electronic signals, characterized by
a first group of said mirrors coated with a mixture of dye and resist (26) operable to reflect a first range of wavelengths of said incident light; and
a second group of said mirrors coated with a mixture of dye and resist (26) operable to reflect a second range of wavelengths of said incident length.

2. The deformable mirror device (10) of claim 1 further comprising a third group of said mirrors (14) coated with a mixture of dye and resist (26), said third group operable to reflect a third range of wavelengths of said incident light.

3. The deformable mirror device (10) of claim 2 wherein said first, second, and third groups of mirrors (14) form a plurality of three-color pixels.

4. The deformable mirror device (10) of claim 3 wherein the dyes are selected from the group comprising anthraquinone, phthalocyanine, azo, and mixtures thereof.

5. The deformable mirror device (10) of claim 4 further comprising a transparent protective layer (30) covering said mirrors (14).

6. The deformable mirror device (10) of claim 5 wherein said transparent protective layer (30) comprises a thin oxide layer.

7. A deformable mirror device (10) comprising:
a plurality of deformable mirrors (14) operable to selectively reflect incident light (28) responsive to applied electronic signals, characterized by
a first group of said mirrors (14) coated with a resist (26) containing a first dye selected from the group consisting of anthraquinone, phthalocyanine, and mixtures thereof;
a second group of said mirrors (14) coated with a resist (26) containing a dye comprising azo;
a third group of said mirrors (14) coated with a resist (26) comprising a third dye selected from the group consisting of azo, anthraquinone, phthalocyanine, and mixtures thereof; and
circuitry for controlling said mirrors (14).

8. The deformable mirror device (10) of claim 7 wherein said first, second and third groups form three-color pixels.

9. The deformable mirror device (10) of claim 8 further comprising a protective layer (30) of silicon dioxide covering said mirrors.

## Patentansprüche

1. Vorrichtung (10) mit verformbaren Spiegeln, enthaltend:
mehrere verformbare Spiegel (14), die abhängig von angelegten elektrischen Signalen selektiv einfallendes Licht (28) reflektieren können, gekennzeichnet durch
eine erste Gruppe der Spiegel, die mit einer Farbstoff-Ätzschutzlack-Mischung (26) beschichtet sind, die einen ersten Bereich von Wellenlängen des einfallenden Lichts reflektiert; und
eine zweite Gruppe der Spiegel, die mit einer Farbstoff-Ätzschutzlack-Mischung (26) beschichtet sind, die einen zweiten Bereich von Wellenlängen des einfallenden Lichts reflektieren kann.

2. Vorrichtung (10) mit verformbaren Spiegeln nach Anspruch 1, ferner enthaltend eine dritte Gruppe der Spiegel (14), die mit einer Farbstoff-Ätzschutzlack-Mischung (26) beschichtet sind, wobei die dritte Gruppe einen dritten Bereich von Wellenlängen des einfallenden Lichts reflektiert.

3. Vorrichtung (10) mit verformbaren Spiegeln nach Anspruch 2, bei welcher die erste, die zweite und die dritte Gruppe von Spiegeln (14) mehrere Dreifarbenpixel bilden.

4. Vorrichtung (10) mit verformbaren Spiegeln nach Anspruch 3, bei welcher die Farbstoffe aus der Anthraquinon, Phthalocyanin, Azo-Farbstoffe und Mischungen davon enthaltenden Gruppe ausgewählt sind.

5. Vorrichtung (10) mit verformbaren Spiegeln nach Anspruch 4, ferner enthaltend eine transparente Schutzschicht (30), die die Spiegel (14) bedeckt.

6. Vorrichtung (10) mit verformbaren Spiegeln nach Anspruch 5, bei welcher die transparente Schutzschicht (30) eine dünne Oxidschicht umfaßt.

7. Vorrichtung (10) mit verformbaren Spiegeln, enthaltend:
mehrere verformbare Spiegel (14), die abhängig von angelegten elektrischen Signalen einfallendes Licht (28) selektiv reflektieren können, gekennzeichnet durch
eine erste Gruppe der Spiegel (14), die mit einem Ätzschutzlack (26) beschichtet sind, der einen ersten Farbstoff enthält, der aus der aus Anthraquinon, Phthalocyanin und Mischungen davon bestehenden Gruppe ausgewählt ist;
eine zweite Gruppe der Spiegel (14), die mit einem Ätzschutzlack (26) beschichtet sind, der mit einem einen Azo-Farbstoff umfassenden Farbstoff enthält;
eine Gruppe der Spiegel (14), die mit einem Ätzschutzlack (26) beschichtet sind, der einen dritten Farbstoff enthält, der aus der aus Azo-Farbstoff, Anthraquinon, Phthalocyanin und Mischungen davon bestehenden Gruppe ausgewählt ist; und
eine Schaltung zum Steuern der Spiegel (14).

8. Vorrichtung (10) mit verformbaren Spiegeln nach Anspruch 7, bei welcher die erste, die zweite und die dritte Gruppe Dreifarbenpixel bilden.

9. Vorrichtung (10) mit verformbaren Spiegeln nach Anspruch 8, ferner enthaltend eine Schutzschicht (30) aus Siliciumdioxid, die die Spiegel bedeckt.

## Revendications

1. Dispositif à miroirs deformables (10) comprenant
une pluralité de miroirs déformables (14) commandables pour réfléchir sélectivement de la lumière incidente (28) en réponse à des signaux électroniques appliqués, caractérisé par
un premier groupe desdits miroirs revêtus avec un mélange de colorent et de vernis (25) focntionnant pour réfléchir une première gamme de longueurs d'ondes de ladite lumière incidence; et
un second groupe desdits miroirs revêtus avec un mélange de colorant et de vernis (26) fonctionnant pour réfléchir une seconde gamme de longueurs d'ondes de ladite lumière incidente.

2. Dispositif à miroirs déformables (10) selon la revendication 1, comprenant en outre un troisième groupe desdits miroirs (14) revêtus avec un mélange de colorant et de vernis (26), ledit troisième groupe fonctionnant pour réfléchir une troisième gamme de longueurs d'ondes de ladite lumière incidente.

3. Dispositif à miroirs déformables (10) selon la revendication 2, dans lequel lesdits premier, deuxième et troisième groupes de miroirs (14) forment une pluralité d'éléments d'image tricolores.

4. Dispositif à miroirs déformables (10) selon la revendication 3, dans lequel les colorants sont selectionnées dans le groupe comprenant une anthraquinone, la phthalocyanine, des composés azoïques, et des mélanges de ceux-ci.

5. Dispositif à miroirs déformables (10) selon la revendication 4, comprenant en outre une couche (30) de protection transparente couvrant lesdits miroirs (14).

6. Dispositif à miroirs déformables (10) selon la revendication 5, dans lequel ladite couche de protection transparente (30) comprend une couche fine d'oxyde.

7. Dispositif à miroirs déformables (10) comprenant :
une pluralité de miroirs déformables (14) fonctionnant pour réfléchir sélectivement de la lumière incidente (28) en réponse à des signaux électroniques appliqués, caractérisé par
un premier groupe desdits miroirs (14) revêtus avec un vernis (26) contenant un premier colorant sélectionné dans le groupe consistant en l'anthraquinone, la phtnalocyenine, et des mélanges de celles-ci;
un second groupe desdits miroirs (14) revêtus avec un vernis (26) contenant un colorant comprenant un composé azoïque;
un troisième groupe desdits miroirs (14) revêtus avec un vernis (26) comprenant un troisième colorant sélectionné dans le groupe consistant en des composés azoïques, de l'anthraquinone, de le phthalocyanine, et des mélanges de celles-ci; et
un circuit pour commander lesdits miroirs (14).

8. Dispositif à miroirs déformables (10) selon la revendication 7, dans lequel lesdits premier, second et troisième groupes forment des éléments d'images tricolores.

9. Dispositif à miroir déformable (10) selon la revendication 8, comprenant en outre une couche de protection (30) de dioxyde de silicium couvrant lesdits miroirs.
